(19) Europäisches Patentamt
European Patent Office
Office européen des brevets

(11) **EP 4 787 460 A1**

(12) **EUROPEAN PATENT APPLICATION**

(43) Date of publication:
05.08.2026 Bulletin 2026/32

(21) Application number: 26153739.3

(22) Date of filing: 23.01.2026

(51) International Patent Classification (IPC):
*H01M 4/136* (2010.01)    *H01M 4/1397* (2010.01)
*H01M 4/58* (2010.01)    *H01M 4/62* (2006.01)
*H01M 4/36* (2006.01)

(52) Cooperative Patent Classification (CPC):
H01M 4/366; H01M 4/136; H01M 4/1397;
H01M 4/5825; H01M 4/622

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 03.02.2025 KR 20250013270

(71) Applicant: SAMSUNG SDI CO., LTD.
Yongin-si, Gyeonggi-do 17084 (KR)

(72) Inventors:
• Kim, Eunji
Yongin-si, Gyeonggi-do 17084 (KR)
• Choi, Jewon
Yongin-si, Gyeonggi-do 17084 (KR)
• Lee, Hyunseop
Yongin-si, Gyeonggi-do 17084 (KR)

(74) Representative: Meissner Bolte Partnerschaft
mbB
Patentanwälte Rechtsanwälte
Postfach 86 06 24
81633 München (DE)

(54) **POSITIVE ELECTRODE, METHOD OF MANUFACTURING THE SAME, AND RECHARGEABLE LITHIUM BATTERY INCLUDING THE SAME**

(57) The present invention relates to a positive electrode (10), a method for producing the positive electrode (10), and a rechargeable lithium battery (100) including the positive electrode (10). The positive electrode (10) includes a positive electrode current collector, a first positive electrode active material layer on the positive electrode current collector, and a second positive electrode active material layer on the first positive electrode active material layer. The first positive electrode active material layer includes a first binder, and the second positive electrode active material layer includes a second binder. The first binder includes a rubber-based binder, and the second binder includes a styrene-acrylic rubber. A thickness ratio of the first positive electrode active material layer to the second positive electrode active material layer is in a range of about 13:7 to about 19:1.

FIG. 1

**Description**

BACKGROUND

The present invention relates to a positive electrode, a method of manufacturing the positive electrode, and a rechargeable lithium battery including the positive electrode.

With increasing presence of battery-powered electronic devices such as, e.g., mobile phones, notebook computers, electric vehicles, and the like, the demand for rechargeable batteries with high energy density and large capacity has been increasing significantly. Accordingly, enhancing the performance of rechargeable lithium batteries may be advantageous.

A rechargeable lithium battery generally typically includes a positive electrode, a negative electrode, and an electrolyte. Both the positive and negative electrodes contain active materials capable of lithium-ion intercalation and deintercalation. Electrical energy is generated through oxidation and reduction reactions as lithium ions move between the electrodes during charging and discharging.

SUMMARY OF THE INVENTION

One issue to be addressed by examples of the present invention is to provide an environmentally friendly and low-resistance positive electrode with an aqueous solvent, and a method for manufacturing the positive electrode.

Another issue to be addressed by examples of the present invention is to provide a rechargeable lithium battery having desired or improved efficiency.

A positive electrode according to the present invention includes a positive electrode current collector, a first positive electrode active material layer on the positive electrode current collector, and a second positive electrode active material layer on the first positive electrode active material layer. The first positive electrode active material layer includes a first binder, the second positive electrode active material layer includes a second binder, the first binder includes a rubber-based binder, the second binder includes a styrene-acrylic rubber (SAR), and a thickness ratio of the first positive electrode active material layer and the second positive electrode active material layer may be in a range of about 13:7 to about 19:1.

A method of manufacturing a positive electrode according to the present invention includes forming a first positive electrode active material layer by coating a first slurry on a positive electrode current collector, and forming a second positive electrode active material layer by coating a second slurry on the first positive electrode active material layer. The first slurry includes a first binder, a first solvent, and a first positive electrode active material. The second slurry includes a second binder, a second solvent, and a second positive electrode active material. At least one of the first solvent and the second solvent is an aqueous solvent, and at least one of the first binder and the second binder is an aqueous binder. The second binder includes a styrene-acrylic rubber (SAR), and a thickness ratio of the first positive electrode active material layer and the second positive electrode active material layer may be in a range of about 13:7 to about 19:1.

A rechargeable lithium battery according to the present invention includes a positive electrode, a negative electrode, and a separator between the positive electrode and the negative electrode. The positive electrode includes a positive electrode current collector, a first positive electrode active material layer on the positive electrode current collector, and a second positive electrode active material layer on the first positive electrode active materials layer. The first positive electrode active material layer includes a first binder, and the second positive electrode active material layer includes a second binder. The first binder includes a rubber-based binder, the second binder includes a styrene-acrylic rubber (SAR), and a thickness ratio of the first positive electrode active material layer and the second positive electrode active material layer is in a range of about 13:7 to about 19:1.

BRIEF DESCRIPTION OF DRAWINGS

FIG. 1 is a schematic conceptual diagram of a rechargeable lithium battery, according to example embodiments of the present invention.

FIGS. 2 to 5 are schematic diagrams illustrating a rechargeable lithium battery according to an example embodiment, in which FIG. 2 is a cylindrical battery, FIG. 3 is a square battery, and FIGS. 4 and 5 are pouch-type batteries.

FIG. 6 is a perspective view of a positive electrode according to example embodiments of the present invention.

FIG. 7 is an enlarged view showing a cross section of the positive electrode active material layer in which the "M" region in FIG. 6 is enlarged.

FIGS. 8 and 9 are enlarged views showing cross sections of positive electrode active material layers according to comparative examples of the present invention.

FIG. 10 is a graph showing the battery efficiency according to the number of cycles of the rechargeable lithium battery.

FIG. 11 is a flowchart showing a method for manufacturing a positive electrode according to examples of the present invention.

DETAILED DESCRIPTION OF EMBODIMENTS

To fully understand the configuration and effects of the present invention, some example embodiments are described with reference to the accompanying drawings. However, the present invention is not limited to the following example embodiments and may be implemented in various forms. The example embodiments are provided solely to illustrate the present invention and to enable those skilled in the art to fully understand its scope.

In this description, when an element is described as being "on" another element, the element may be "directly on" the other element, or one or more intervening elements may be present therebetween. In the drawings, certain thicknesses may be exaggerated to better illustrate technical details. Throughout the specification, like reference numerals indicate like elements.

The example embodiments described herein may be illustrated using sectional and/or plan views, which are presented as idealized examples of the present invention. The thicknesses of layers and regions in the drawings may be exaggerated for clarity. The regions shown in the drawings are for illustrative purposes and should not be construed as limiting the scope of the present invention. Although terms such as "first," "second," and "third" may be used to describe various elements, these terms are merely for distinction and do not imply any particular order or hierarchy. The example embodiments described and illustrated herein include complementary variations.

The terms used in this description serve only to explain various embodiments and are not intended to limit the present invention. Unless explicitly stated otherwise, singular forms may also include plural forms. The terms "comprises/includes" and "comprising/including" do not exclude the presence or addition of one or more other components.

In this description, the phrase "combination thereof" may refer to a mixture, a stack, a composite, a copolymer, an alloy, a blend, or a reaction product.

The phrases "A or B," "at least one of A and B," "at least one of A or B," "A, B, or C," "at least one of A, B, and C," and "at least one of A, B, or C" include any one or all possible combinations of the listed elements.

Unless otherwise specifically defined, the term "particle diameter" refers to an average particle diameter. The particle diameter may represent the median particle size (D50), which corresponds to the diameter of particles at 50 vol% in a cumulative particle size distribution. The average particle diameter (D50) can be measured using widely known methods, such as a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.

In some example embodiments, the average particle diameter may be determined by randomly selecting 100 or more particles from an electron microscope image. Alternatively, the average particle diameter may be measured using a particle size analyzer and defined as the diameter corresponding to 50 vol% in a cumulative particle size distribution.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

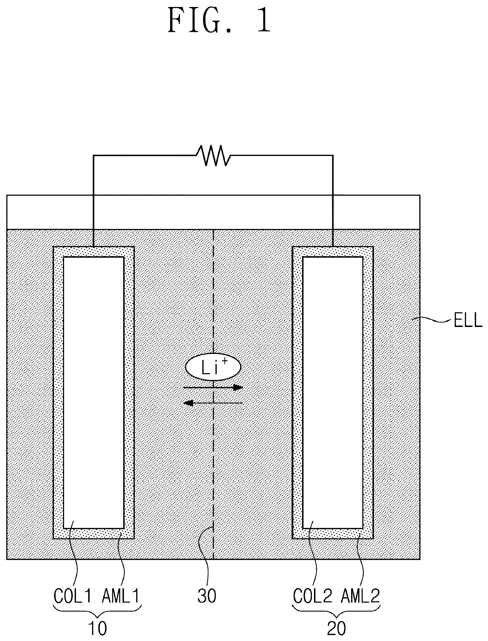

FIG. 1 is a cross-sectional view of a rechargeable lithium battery according to example embodiments of the present invention. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium configured to transfer lithium ions between the positive electrode 10 and the negative electrode 20. In the electrolyte solution ELL, the lithium ions may move through the separator 30 toward the positive electrode 10 or the negative electrode 20.

## Positive Electrode 10

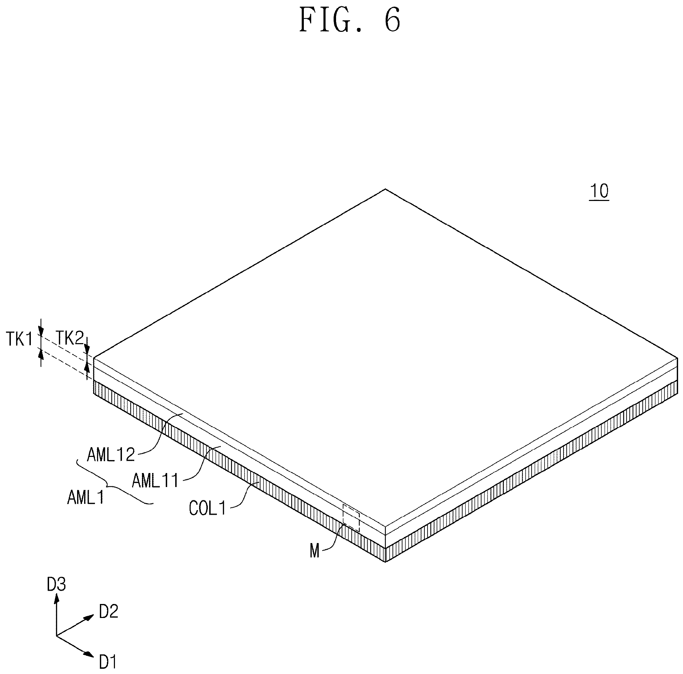

FIG. 6 is a perspective view of a positive electrode 10 according to example embodiments of the present invention. Referring to FIG. 6, the positive electrode 10 may include a current collector COL1 and a positive electrode active material layer AML1 on the current collector COL 1. In some example embodiments, the positive electrode 10 may also include a first positive electrode active material layer AML11 on the current collector COL1, and a second positive electrode active material layers AML12 on the first positive electrode active materials layer AML11. The positive electrode active material layer AML1 may include the first positive electrode active material layers AML11 and the second positive electrode active materials layers AML12.

In this description, the current collector COL1 and the positive electrode collector COL1 may be interchangeably used.

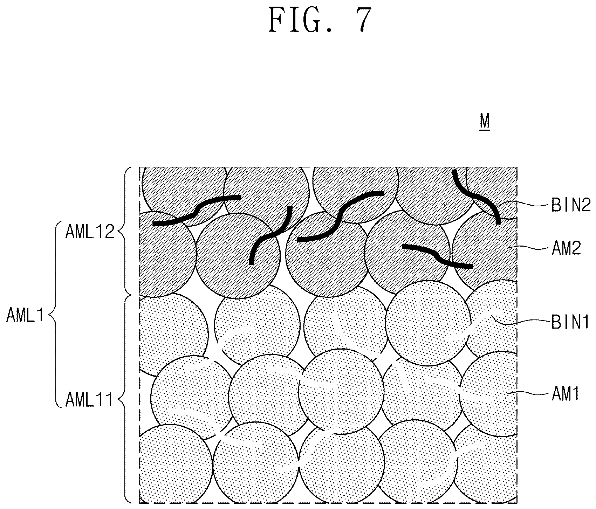

FIG. 7 is an enlarged view showing a cross section of the positive electrode active material layer AML1 in which the "M" region in FIG. 6 is enlarged. Referring to FIG. 7, the first positive electrode active material layer AML11 may include a first positive electrode active material AM1 and a first binder BIN1. The second positive electrode active material layer AML12 may include a second positive electrode active material AM2 and a second binder BIN2. The first positive active material AM1 and the second positive active material AM2 are described below.

The first binder BIN1 may include a rubber-based binder. The first binder BIN1 may include an aqueous binder. The first binder BIN1 may include a binder that is a rubber-based binder and an aqueous binder. The first binder BIN1 may include one or more binder combinations.

The first binder BIN1 may include at least one of a styrene-butadiene rubber (SBR), a nitrile butadiene rubber (NBR), a carboxylated Nitrile Butadiene Rubber (XNBR), or a combination thereof.

The first binder BIN1 may further include styrene-acrylic rubber (SAR). An amount of the styrene acrylic rubber SAR in the first biner BIN1 may be, for example, in a range of about 0 wt% to about 20 wt%, based on a total weight of the first binder BIN1. The styrene-acrylic rubber SAR included in the first binder BIN1 may contribute to improving the conductivity of the first positive electrode active material layer AML11. However, when the styrene-acrylic rubber SAR is included at a certain weight or more, the adhesive force may be reduced.

An amount of the first binder BIN1 may be, for example, in a range of about 1 wt% to about 5 wt%, based on a total weight of the first positive electrode active material layer AML11. When the amount of the first binder BIN1 is less than the above range, the adhesive force between the positive electrode current collector COL1 and the positive electrode active material layer AML1 may be reduced. When the amount of the first binder BIN1 exceeds the above range, the resistance of the positive electrode may be substantially high.

The second binder BIN2 may include Styrene-Acrylic Rubber SAR. The second binder BIN2 may further include another binder in addition to the styrene-acrylic rubber.

The second binder BIN2 may further include styrene-butadiene rubber SBR. An amount of the styrene-butadiene rubber in the second binder BIN2 may be, for example, in a range of about 0 wt% to about 20 wt%, or about 1 wt% or about 20 wt%, based on a total weight of the second binder BIN2.

An amount of the second binder BIN2 may be, for example, in a range of about 1 wt% to about 5 wt%, based on a total weight of the second positive electrode active material layer AML12. When the amount of the second binder BIN2 is less than the above range, the resistance of the positive electrode may be high. When the amount of the second binder BIN2 exceeds the above range, the positive electrode active material layer may be substantially rigid and cause breakage of the electrode plate. In addition, cracks may be generated on the surface of the positive electrode active material layer AML1 at the time of manufacturing the positive electrode.

The first binder BIN1 and the second binder BIN2 may be included in one or more binder combinations. The first binder BIN1 and the second binder BIN2 may be the same or different.

The first binder BIN1 and the second binder BIN2 may include only an aqueous binder. Because the first binder BIN1 and the second binder BIN2 may include only an aqueous binder, the use of an organic solvent, which is typically used in the production of a positive electrode, may be reduced, and thus a positive electrode that may be environmentally friendly may be produced.

The positive electrode active material layer AML1 may have a double-layer structure including a first positive electrode active material layer AML11 and a second positive electrode active material layer AML12. When the positive electrode active material layer AML1 has a double-layer structure, binder migration may be reduced or suppressed, and the adhesive force may be improved.

The positive electrode active material layer AML1 may contribute to improvement in the conductivity of the positive electrode by including the second binder BIN2 including styrene-acrylic rubber in the second positive electrode active material layer AML12.

The first binder BIN1 included in the first positive electrode active material layer AML11 may compensate for the structural instability of the electrode plate caused by the styrene-acrylic rubber including acrylic groups included in the positive electrode active material layer AML1. The first binder BIN1 may increase the flexibility of the polar plate, which is reduced due to the styrene-acrylic rubber, and can contribute to improving the adhesion of the positive electrode.

Referring again to FIG. 6, the thickness TK1 of the first positive electrode active material layer AML11 may be greater than the thickness TK2 of the second positive electrode active material layer AML12. The thickness ratio of the first positive electrode active material layer AML11 and the second positive electrode active material layer AML12 may be, for example, in a range of about 13:7 to about 19:1, about 7:3 to about 19:1, or about 7:3 to about 9:1. When the first positive electrode active material layer AML11 is thin, the adhesive force of the positive electrode may be reduced. When the first positive electrode active material layer AML11 is thick, the resistance may be substantially large. When the second positive electrode active material layer AML12 is substantially thick, the structural stability of the positive electrode may decrease.

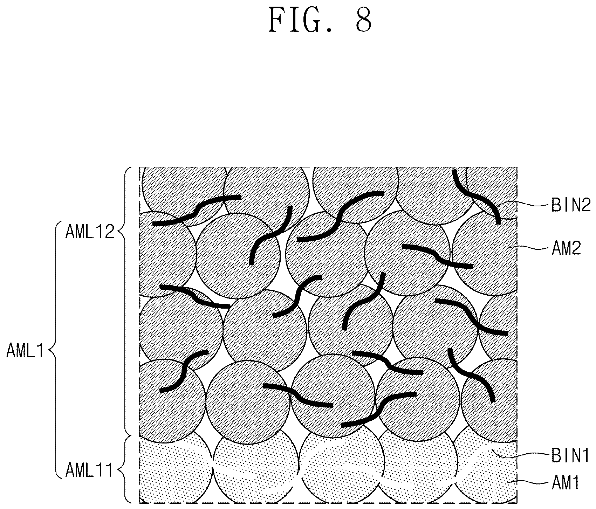

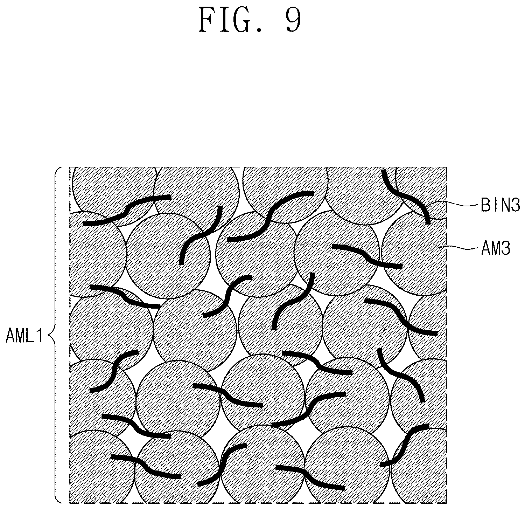

FIG. 7 is a cross-sectional view of the positive electrode active material layer AML1 according to the present invention, while FIGS. 8 and 9 are cross-sectional views of the positive electrode Active Material layer AML1 in accordance with Comparative Examples.

Referring to FIG. 8, FIG. 8 is a cross-sectional view when the second positive electrode active material layer AML12 is substantially thick as in Comparative Example 2. When the second positive electrode active material layer AML12 including SAR is substantially thick as in Comparative Example 2, cracks may be generated on the surface during manufacturing of the positive electrode, and the flexibility may be low.

FIG. 9 is a cross-sectional view showing a positive electrode of a single layer structure as in Comparative Example 1 or Comparative Example 4. In the same case as Comparative Example 1, the adhesive force may be low. In the case of Comparative Example 4, it the resistance is substantially high.

Although not illustrated, the first positive electrode active material layer AML11 and/or the second positive electrode active material layer AML12 may further include at least one of a conductive material, a filler, a coating agent, a dispersant, and an ion conductive auxiliary agent.

The conductive material may be included to impart conductivity (e.g., electrical conductivity) to the electrode. Any material that does not cause adverse chemical change (e.g., does not cause an undesirable chemical change in the rechargeable lithium battery), and that conducts electrons, can be included in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material including at least one of copper, nickel, aluminum, silver, and the like, in a form of a metal powder or a metal fiber; a conductive polymer such as a polyphenylene derivative; or a mixture thereof.

The amount of the conductive material in the positive electrode active material layer AML1 may be, for example, in a range of about 0 wt% to about 5 wt %, or about 0.5 wt % to about 5 wt%, based on a total weight of the positive electrode active material layer AML1.

The amount of the conductive material in the first positive electrode active material layer AML11 may be, for example, in a range of about 0 wt% to about 5 wt %, or about 0.5 wt % to about 5 wt%, based on a total weight of the first positive electrode active material layer AML11.

The amount of the conductive material in the second positive electrode active material layer AML12 may be, for example, in a range of about 0 wt% to about 5 wt %, or about 0.5 wt % to about 5 wt%, based on a weight of the second positive electrode active material layer AML 12.

Al may be included as the current collector COL1, but the current collector COL1 is not limited thereto.

## Positive Electrode Active Material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be included.

The composite oxide may include at least a compound having a layered crystal structure, a compound having an olivine crystal structure, and a compound having a spinel crystal structure.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be included. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_dX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

Referring back to FIG. 7, the positive electrode active material layer AML1 may include the first positive electrode active material AM1 and/or the second positive electrode active material AM2. The first positive electrode active material layer AML11 may include the first positive electrode active material AM1. The second positive electrode active material layer AML12 may include the second positive electrode active material AM2.

The above description of the positive electrode active material may apply to the first positive electrode active material AM1 and/or the second positive electrode active material AM2.

The first positive active material AM1 may be the same as, or different from, the second positive active material AM2.

The first positive electrode active material AM1 may include at least one of a compound having a layered crystal structure, a compound having an olivine crystal structure, a compound having a spinel crystal structure, or combinations thereof. The first positive electrode active material AM1 may include a compound having an olivine crystal structure.

The second positive electrode active material AM2 may include at least one of a compound having a layered crystal structure, a compound having an olivine crystal structure, a compound having a spinel crystal structure, or combinations thereof. The second positive electrode active material AM2 may include a compound having an olivine crystal structure.

The compound having an olivine crystal structure may include, for example, at least one of a lithium iron phosphate-based compound, a lithium manganese phosphate-based compound, a lithium manganese iron phosphate-based compound or a combination thereof. The material is not limited to the above examples as long as the material has an olivine crystal structure and may be included as a positive electrode active material.

As the first positive electrode active material AM1, for example, one or more compounds of the above-described positive electrode active materials may be included in combination.

As the second positive electrode active material AM2, for example, one or more compounds of the above-described positive electrode active materials may be included in combination.

As an example, a lithium iron phosphate-based compound may be included as the first positive electrode active material or/and the second positive electrode active material.

As an example, a lithium iron phosphate-based compound and a lithium iron manganese phosphate-based compound may be mixed at a mass ratio of about 4:1 and included as the first positive electrode active material or/and the second positive electrode active material.

As an example, a lithium iron phosphate-based compound and lithium nickel cobalt manganese oxide may be mixed at a mass ratio of about 9:1 and included.

Each of, or at least one of, the first positive electrode active material AM1 and the second positive electrode active material AM2 is not limited to the above examples as long as the positive electrode active material may be determined by those skilled in the art, and a positive electrode active material may be included in various combinations.

The amount of the positive active material in the positive active material layer AML1 may be in a range of about 90 wt% to about 99.5 wt% based on a total weight of the positive electrode active material layer. The amount of the positive electrode active material may be the sum of the amount of the first positive electrode active material (AM1) and the amount of the second positive electrode active material (AM2).

The amount of the first positive electrode active material (AM1) in the first positive electrode active material layer (AML11) may be in a range of about 90 wt% to about 99.5 wt% based on a total weight of the first positive electrode active material layer.

The amount of the second positive electrode active material (AM2) in the second positive electrode active material layer (AML12) may be in a range of about 90 wt% to about 99.5 wt% based on a total weight of the second positive electrode active material layer.

## Method of manufacturing a positive electrode

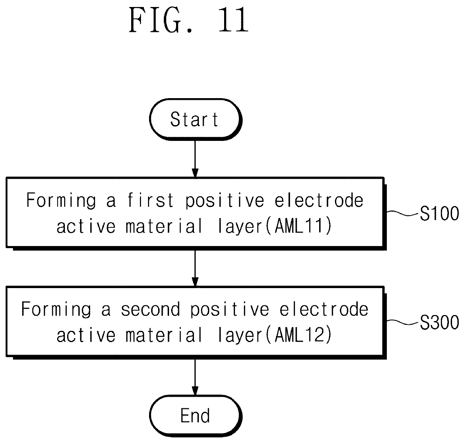

FIG. 11 is a flowchart illustrating a method of manufacturing a positive electrode according to examples of the present invention. Referring to FIG. 11, the method of manufacturing the positive electrode 10 may include forming a first positive electrode active material layer AML11 (S100), and forming a second positive electrode active material layer AML12 (S300).

The first positive electrode active material layer AML11 may be formed by coating the first slurry onto the positive electrode current collector COL1, and drying the first slurry (S100).

The first slurry may include at least one of a first binder BIN1, a first solvent, and a first positive electrode active material AM1.

The second positive electrode active material layer AML12 may be formed by coating the second slurry onto the first positive electrode active material layer AML11, and drying the second slurry (S300). After drying of the coated second slurry is completed, rolling may be performed to produce the positive electrode 10.

The second slurry may include at least one of a second binder (BIN2), a second solvent, and a second positive electrode active material (AM2).

Hereinafter, descriptions of the first binder BIN1, the second binder BIN2, the first positive active material AM1, the second positive active material AM2, and the like, which are the same as those described above, are omitted.

Each of, or at least one of, the first solvent and the second solvent may include an aqueous solvent. The first solvent may be an aqueous solvent. The second solvent may be an aqueous solvent.

For example, the aqueous solvent may include DIW (Deionized Water).

The positive electrode 10 according to an example may be manufactured under an aqueous system using only an aqueous solvent in the manufacturing process. Unlike a typical method for producing a positive electrode using a non-aqueous binder such as PVDF and an organic solvent such as NMP, the positive electrode of the present invention may be produced more environmentally friendly by producing the positive electrode under an aqueous system.

The thickness ratio of the first positive electrode active material layer AML11 to the second positive electrode active material layer AML12 of the manufactured positive electrode 10 may be in a range of about 13:7 to about 19:1. Thus, the amount of the first slurry and the amount of the second slurry coated in steps S100 and S300 may be different.

## Negative Electrode 20

The negative electrode 20 for a rechargeable lithium battery may include a current collector COL2 and a negative electrode active material layer AML2 on the current collector COL2, as illustrated in FIG. 1. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may be configured to attach the negative electrode active material particles to each other, and to attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may be included to impart conductivity (e.g., electrical conductivity) to the electrode. Any material that does not cause an adverse chemical change (e.g., does not cause an undesirable chemical change in the rechargeable lithium battery), and that conducts electrons, can be included in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including copper, nickel, aluminum, silver, and the like, in a form of a metal powder or a metal fiber, a conductive polymer such as a polyphenylene derivative, or a mixture thereof.

The negative current collector COL2 may include at least one of a copper foil, a nickel foil, a stainless-steel foil, a titanium foil, a nickel foam, a copper foam, a polymer substrate coated with a conductive metal, or a combination thereof.

## Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be or include graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x < 2), and a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO2, a Sn-based alloy, or a combination thereof.

The silicon-carbon composite may be a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be present between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be included in combination with a carbon-based negative electrode active material.

## Separator 30

Depending on the type of rechargeable lithium battery, the separator 30 illustrated in FIG. 1 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one surface, or on both surfaces, of the porous substrate.

The porous substrate may be or include a polymer film formed of or including any one or more of polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al2O3, SiO2, TiO2, SnO2, CeO2, MgO, NiO, CaO, GaO, ZnO, ZrO2, Y2O3, SrTiO3, BaTiO3, Mg(OH)2, boehmite, and a combination thereof, but is not limited thereto.

The organic material and the inorganic material may be mixed in one coating layer, or a coating layer including an organic material and a coating layer including an inorganic material may be stacked together.

## Electrolyte (ELL)

The electrolyte solution ELL for a rechargeable lithium battery illustrated in FIG. 1 may include a non-aqueous organic solvent and a lithium salt.

The non-aqueous organic solvent may be configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like.

The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be included alone or in combination of two or more solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

## Rechargeable lithium battery

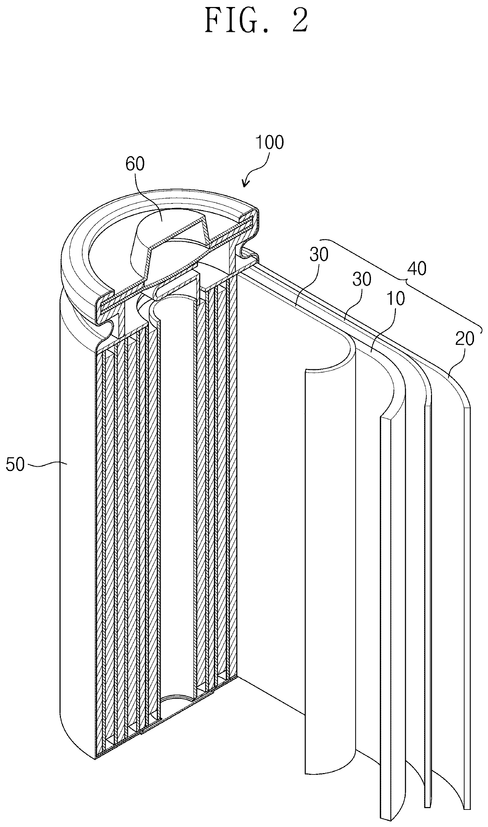

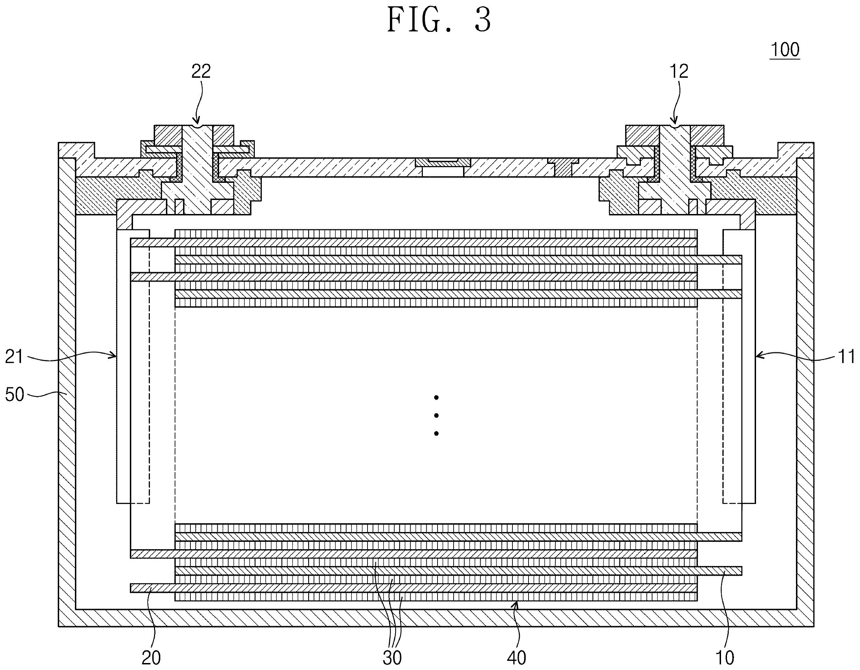

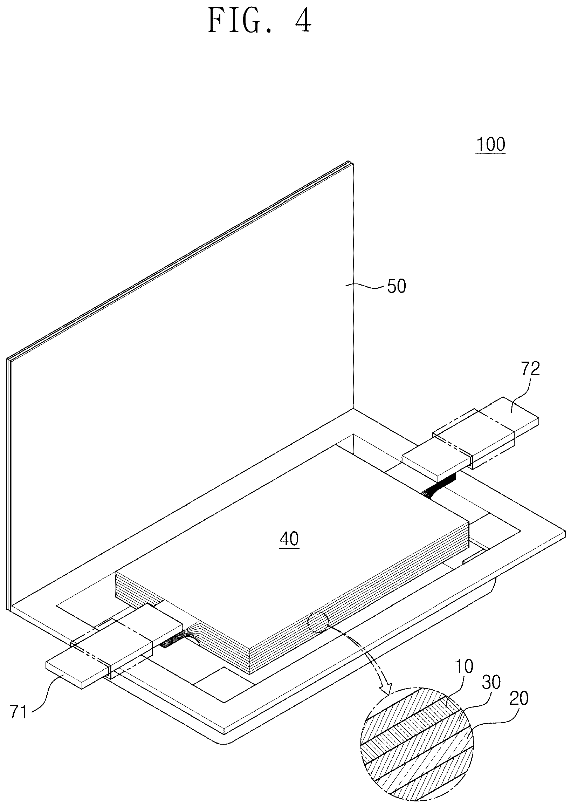

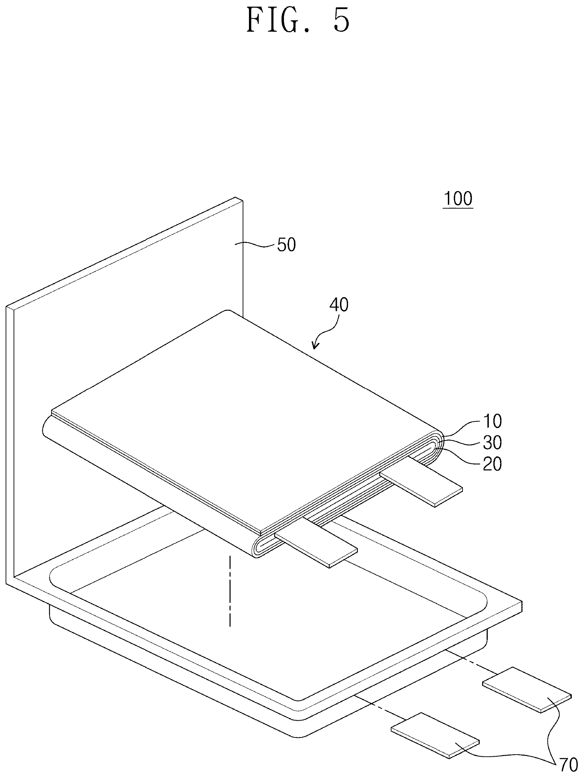

The rechargeable lithium battery may be classified into cylindrical, prismatic, pouch, or coin-type batteries, and the like depending on their shape. FIGS. 2 to 5 are schematic views illustrating a rechargeable lithium battery according to an example embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12 connected to the positive lead tab 11, a negative lead tab 21, and a negative terminal 22 connected to the negative lead tab 21. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

The following Examples and Comparative Examples are provided in order to highlight characteristics of one or more example embodiments, but it is understood that the Examples and Comparative Examples are not to be construed as limiting the scope of the example embodiments, nor are the Comparative Examples to be construed as being outside the scope of the example embodiments. Further, it is understood that the example embodiments are not limited to the particular details described in the Examples and Comparative Examples.

## Example 1 - Thickness of first positive electrode active material layer: thickness of second positive electrode active material layer = 8:2

1) Preparation of First Slurry

A first slurry was prepared by dissolving 95 g of LFP ($LiFePO_4$), 25 g of a styrene-butadiene rubber SBR binder solution, and 2.5 g of Super P in 30 ml of Deionized Water DIW. Here, the amount of SBR in the binder solution was 10 wt%, and the solvent is DIW.

2) Preparation of Second Slurry

A second slurry was prepared by dissolving 95 g of LFP, 25 g of a styrene-acrylic rubber (SAR) binder solution, and 2.5 g of Super P in 30 ml of DIW. Here, the amount of SAR in the binder solution was 10 wt%, and the solvent was DIW.

3) Positive Electrode Preparation

The first slurry was coated to the Al foil and then dried, and then the second slurry was coated and dried again. Then, rolling was performed to produce a positive electrode. At this time, the thickness of the first positive electrode active material layer formed of the first slurry is 62 $\mu m$, and the thickness of the second positive electrode active material layers formed of the second slurry was 15 $\mu m$.

**Example 2** - **Thickness of first positive electrode active material layer:thickness of second positive electrode active material layer = 7:3**

The first slurry and the second slurry were prepared in the same manner as in Example 1, with a difference that the thicknesses of the first positive electrode active material layer and the second positive electrode active material layer on the prepared positive electrode were 54 $\mu$m and 23 $\mu$m, respectively.

**Example 3** - **Thickness of first positive electrode active material layer: thickness of second positive electrode active material layer = 8:2**

A positive electrode was prepared in the same manner as in Example 1, with a difference that the binder of the first slurry was nitrile butadiene rubber (NBR) instead of SBR.

**Comparative Example 1 - Single Layer (with Organic Solvent)**

95 g of LFP ($Li_aFePO_4$), 2.5 g of a polyvinylidene fluoride (PVdF) binder, and 2.5 g of Super P were mixed in 30 ml of NMP (N-Methyl-2-pyrrolidone) to prepare a positive electrode slurry, which was coated to an Al foil, dried, and rolled to prepare the positive electrode. At this time, the thickness of the positive electrode active material layer is 78 $\mu$m.

**Comparative Example 2 - Thickness of first positive electrode active material layer:thickness of second positive electrode active material layer: 3:7**

A positive electrode was prepared in the same manner as in Example 1, with a difference that the thicknesses of the first positive electrode active material layer and the second positive electrode active material layer on the prepared positive electrode were 23 $\mu$m and 54 $\mu$m, respectively.

**Comparative Example 3 - Thickness of first positive electrode active material layer: thickness of second positive electrode active material layer = 5:5**

A positive electrode was prepared in the same manner as in Example 1, with a difference that the thicknesses of the first positive electrode active material layer and the second positive electrode active material layer on the prepared positive electrode were 39 $\mu$m and 39 $\mu$m, respectively.

**Comparative Example 4** - **Single Layer (with SBR Binder)**

A positive electrode was prepared in the same manner as in Comparative Example 1, with a difference that the first slurry of Example 1 was used as the slurry. At this time, the thickness of the positive electrode active material layer was 78 $\mu$m.

Table 1 below summarizes the respective examples and comparative examples. The first binder in Table 1 below indicates a binder in the first positive electrode active material layer, and the second binder indicates a binder of the second positive electrode active material layers.

Table 1:

| | First Binder | Second Binder | Thickness Ratio of First Positive Electrode Active Material Layer to Second Positive Electrode Active Material Layer | Solvents |
|---|---|---|---|---|
| Example 1 | SBR | SAR | 8:2 | $H_2O$ |
| Example 2 | SBR | SAR | 7:3 | $H_2O$ |
| Example 3 | NBR | SAR | 8:2 | $H_2O$ |
| Comparative Example 1 | PVdF | | (Single Layer) | NMP |
| Comparative Example 2 | SBR | SAR | 3:7 | $H_2O$ |
| Comparative Example 3 | SBR | SAR | 5:5 | $H_2O$ |
| Comparative Example 4 | SBR | | (Single Layer) | |

**Negative Electrode Preparation**

A negative electrode slurry was prepared by mixing 97.5 g of graphite (negative electrode active material), 1.5 g of carboxymethyl cellulose, and 1 g of styrene-butadiene rubber.

The negative electrode slurry was coated to a Cu foil, dried, and rolled to prepare a negative electrode.

**Rechargeable lithium Battery Preparation**

A coin full cell was produced using the negative electrode and the positive electrode, a separator made of polyethylene, and an electrolytic solution. As the electrolytic solution, a solution obtained by dissolving 1.5 M of $LiPF_6$ in an organic solvent obtained by mixing ethylene carbonate (EC), diethyl carbonate (DEC), and dimethyl carbonate (DMC) at a volume ratio of 2:1:7 and adding 3.5 parts by weight of fluoroethylene carbonate (FEC) to 100 parts by weight of the organic solvent was used.

In addition, a coin half-cell in which the counter electrode of the coin full cell configuration was applied with 0.5 mm Li metal was fabricated.

**Evaluation Example** 1 - **Measurement of Adhesion and bending Strength**

The adhesion strength of the positive active material layer was measured using a universal testing machine (UTM). For this, polyvinyl chloride (PVC) double-side tape was attached to the positive active material layer and then peeled off at a 180° angle at a speed of 100 mm/min to evaluate the adhesion strength (gf/mm). Bending strength was measured by placing a specimen in two support anvils and applying a force to one loading anvil to bend the specimen through a 3-point bending analysis instrument.

The results are summarized in Table 2 below.

Table 2:

|  | Adhesion (gf/mm) | Bending Strength (N) | Remark (Thickness Ratio) |
|---|---|---|---|
| Example 1 | 4.13 | 0.68 | 8:2 |
| Example 2 | 4.00 | 0.69 | 7:3 |
| Example 3 | 4.68 | 0.61 | 8:2 |
| Comparative Example 1 | 2.55 | 0.81 (Break) | (Single Layer) |
| Comparative Example 2 | 0.96 | unmeasurable | 3:7 |
| Comparative Example 3 | 3.12 | 0.72 | 5:5 |
| Comparative Example 4 | 4.82 | 0.55 | (Single Layer) |

From Table 2, it can be seen that the Examples have significantly higher adhesion than Comparative Example 1, which was prepared using an organic solvent in a conventional manner.

For example, in the case of Comparative Example 1, the electrode was broken in half when a certain force was applied in the flexural strength measurement, and a relatively high bending strength was measured. This is considered to be because the electrode was hard and lacks flexibility.

In addition, in the case of Comparative Example 2 in which the second active material layer was thick, it can be seen that fine cracks were already present on the surface of the electrode, and accurate measurement of the bending strength was not possible, and the adhesive force was also low. In the case of Comparative Example 2, the second active material layer including SAR is thick, and the electrode becomes substantially hard due to the acrylic group, and cracks are observed from the production stage, and it is determined that a part of the active material in which cracks are generated is already peeled off from the current collector, and the adhesive force is measured to be low.

Accordingly, when a rubber-based binder such as SBR is included, but the second positive electrode active material layer including SAR is not thick as in Examples or Comparative Examples 3 and 4, the adhesive force is superior to the adhesive force of Comparative Example 1 produced by an existing method, and flexibility is ensured.

**Evaluation Example 2** - **Measurement of Resistance (DC-IR; Direct current internal resistance)**

The initial resistance and the resistance increase rate, when the positive electrodes of Examples and Comparative Examples identified in Evaluation Example 1 were used in a battery, were measured.

Specifically, a coin full cell including the positive electrode of Examples or Comparative Examples was produced by the above-described method.

First, the cell was charged at a constant current of 0.1C with a cutoff voltage of 3.65 V at room temperature (25°C). Then, constant voltage charging was performed at 3.65 V until the current decreased to 0.05C. Subsequently, the cell was discharged at a constant current of 0.1C until the voltage reached 2.5 V, completing the formation process.

The cell that underwent the formation process was charged at a constant current of 0.33C until the voltage reached 3.65 V. Then, constant voltage charging was performed at 3.65 V until the current decreased to 0.05C. After that, the cell was discharged at a constant current of 0.33C until the voltage reached 2.5 V, completing the standard process. Subsequently, the cell was charged at a current of 0.33C until it reached SOC 50 (defined as the state where the charge capacity is 50% when the total battery charge capacity is considered 100%). Finally, a current of 1C was applied for 10 seconds to measure the voltage drop (V), and the initial DC internal resistance (DC-IR) was evaluated.

The rechargeable lithium battery that underwent the formation process and the standard process was charged at a constant current of 0.5C at 25°C until the voltage reached 3.65 V. Then, constant voltage charging was performed at 3.65 V until the current decreased to 0.05C. Subsequently, the battery was discharged at a constant current of 0.5C until the voltage reached 2.5 V. This charge-discharge cycle was repeated 100 times. After 100 cycles, the DC-IR resistance of the positive electrode was measured again.

The resistance increase rate was determined using the measured initial resistance and the resistance value after 100 cycles. The resistance increase rate was determined by the following Formula 1. The results are shown in Table 3 below.

Resistance increase rate (%) = (Resistance after 100 cycles/Initial resistance) $\times$ 100 (%).          Formula 1:

Table 3:

|  | Initial Resistance (Ω) | Resistance after 100 cycles(Ω) | Resistance Increase Rate (%) | Remark (Thickness Ratio) |
|---|---|---|---|---|
| Example 1 | 7.138 | 7.675 | 107.52 | 8:2 |
| Example 2 | 6.843 | 8.212 | 120.00 | 7:3 |
| Example 3 | 7.511 | 8.518 | 113.40 | 8:2 |
| Comparative Example 1 | 7.095 | 7.808 | 110.05 | (Single Layer) |
| Comparative Example 2 | 9.861 | 26.562 | 269.37 | 3:7 |
| Comparative Example 3 | 6.716 | 14.570 | 216.94 | 5:5 |
| Comparative Example 4 | 8.719 | 11.237 | 128.88 | (Single Layer) |

As shown in Table 3, in Comparative Examples 3 and 4, Evaluation Example 1 exhibited desired or improved adhesion strength and bending strength similar to the adhesion strength and bending strength of the Examples. However, after 100 cycles, the resistance values and resistance increase rate were significantly higher.

Additionally, the Examples exhibited resistance values and resistance increase rates nearly equivalent to those of Comparative Example 1. In other words, the Examples not only allow for a more environmentally friendly manufacturing process compared to Comparative Example 1, which uses an organic solvent, but also exhibit similar or even lower resistance values and resistance increase rates while demonstrating significantly superior adhesion strength.

## Evaluation Example 3 - Measurement of Capacity Retention Rate

In order to confirm that the positive electrodes of Examples and Comparative Examples confirmed in Evaluation Example 1 and Evaluation Example 2 had a desired or improved effect even when used in a battery, the capacity retention rate was evaluated. The capacity retention rate was typically measured for Example 1, Example 3, Comparative Example 1, Comparative Example 2, and Comparative Example 3.

For example, a coin full cell including the positive electrode according to each of the above Examples or Comparative Examples was produced by the above-described method. The produced battery was subjected to a formation process of constant-current charging at normal temperature (25 °C) with a current of 0.1 C and a cut-off voltage of 3.65 V, constant-voltage charging while maintaining 3.65 V until the current reached 0.05 C, and then discharging at a constant current of 0.1 C until the voltage reached 2.5 V.

The battery subjected to the formation process was subjected to a standard process of constant-current charging at a current of 0.2 C until the voltage reached 3.65 V, constant-voltage charging while maintaining 3.65 V until the current reached 0.05 C, and then discharging at a constant current of 0.2 C at the time of discharging until the voltage reached 2.5 V. At this time, the charge capacity and the discharge capacity were measured.

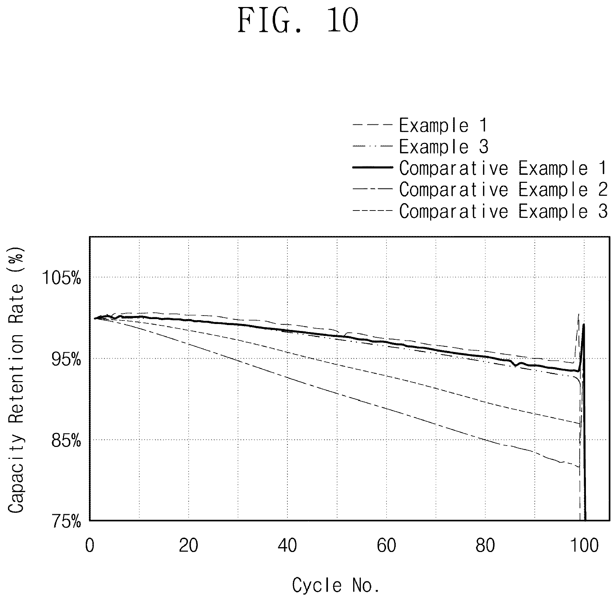

The rechargeable lithium battery subjected to the formation process and the standard process was subjected to constant-current charging at 25 °C. with a current of 0.5 C until the voltage reached 3.65 V, and constant-voltage charging while maintaining 3.65 V until the current reached 0.05 C. Then, a cycle of discharging at a constant current of 0.5 C until the voltage reached 2.5 V at the time of discharging was repeated 100 times. At this time, the capacity retention rate of each cycle was determined as shown in the following Formula 2, and the capacity retention rate for each cycle is shown graphically in FIG. 10.

$$\text{Capacity retention rate (\%)} = (\text{Discharge capacity at the } n^{\text{th}} \text{ cycle}/\text{Discharge capacity at the } 1^{\text{st}} \text{ cycle}) \times 100 \text{ (\%)}$$ (where n is an integer from 1 to 100).

Formula 2:

Referring to FIG. 10, it can be confirmed that the capacity retention rate is significantly low when the second positive electrode active material layer is thick as in Comparative Examples 2 and 3. It is considered that this is because even when the initial capacity of the battery is similar, the resistance increase rate according to the cycle is high, and thus the battery deterioration occurs more rapidly.

In addition, in the case of Example 1, not only is the capacity retention rate significantly higher than the capacity retention rate of Comparative Example 2, but also it can be confirmed that the capacity retention rate of Example 1 is superior to the capacity retention rate of Comparative Example 1 prepared using an existing organic solvent. It can be confirmed that Example 3 also shows a capacity retention rate equivalent to the capacity retention rate of Example 1.

The method for producing a positive electrode according to examples of the present invention is environmentally friendly by producing the positive electrode using an aqueous solvent that is not an organic solvent. In addition, the positive electrode produced by the above example method can have desired or improved adhesion and low resistance as compared with a positive electrode produced from an existing organic solvent. A rechargeable lithium battery including the positive electrode can have desired or improved efficiency.

While the present invention has been described with reference to example embodiments, it should be understood that these example embodiments are provided for illustrative purposes only and do not limit the scope of the present invention. Various modifications and equivalent arrangements may be made without departing from the spirit and scope of the appended claims. Accordingly, the described example embodiments should be regarded as examples rather than limitations of the present invention.

**Claims**

1. A positive electrode (10), comprising:

    a positive electrode current collector;
    a first positive electrode active material layer on the positive electrode current collector; and
    a second positive electrode active material layer on the first positive electrode active material layer, wherein:

        the first positive electrode active material layer comprises a first binder,
        the second positive electrode active material layer comprises a second binder,
        the first binder comprises a rubber-based binder,
        the second binder comprises a styrene-acrylic rubber , and
        a thickness ratio of the first positive electrode active material layer to the second positive electrode active material layer is in a range of about 13:7 to about 19:1.

2. The positive electrode (10) according to claim 1, wherein an amount of the first binder is in a range of about 1 wt% to about 5 wt% based on a total weight of the first positive electrode active material layer.

3. The positive electrode (10) according to claim 1 or 2, wherein an amount of the second binder is in a range of about 1 wt% to about 5 wt% based on a total weight of the second positive electrode active material layer.

4. The positive electrode (10) according to any of the preceding claims , wherein the first binder comprises at least one of a styrene-butadiene rubber , a nitrile butadiene rubber , a carboxylated nitrile butadiene rubber , and a combination thereof.

5. The positive electrode (10) according to claim 4, wherein:

the first binder further comprises a styrene-acrylic rubber, and
an amount of the styrene-acrylic rubber is in a range of about 1 wt% to about 20 wt% based on a total weight of the first binder.

6. The positive electrode (10) according to any of the preceding claims, wherein:

the second binder further comprises a styrene-butadiene rubber, and
an amount of the styrene-butadiene rubber is in a range of about 1 wt% to about 20 wt% based on a total weight of the second binder.

7. The positive electrode (10) according to any of the preceding claims , wherein the first binder and the second binder are different from each other.

8. The positive electrode (10) according to any of the preceding claims , wherein:

the first positive electrode active material layer further comprises a first positive electrode active material, and
the second positive electrode active material layer further comprises a second positive electrode active material.

9. The positive electrode (10) according to claim 8, wherein at least one of the first positive electrode active material and the second positive electrode active material comprises a compound having an olivine crystal structure.

10. A method of manufacturing a positive electrode (10), the method comprising:

forming a first positive electrode active material layer by coating a first slurry on a positive electrode current collector; and
forming a second positive electrode active material layer by coating a second slurry on the first positive electrode active material layer, wherein:

the first slurry comprises a first binder, a first solvent, and a first positive electrode active material,
the second slurry comprises a second binder, a second solvent, and a second positive electrode active material,
at least one of the first solvent and the second solvent comprises an aqueous solvent,
at least one of the first binder and the second binder comprises an aqueous binder,
the second binder comprises a styrene-acrylic rubber , and
a thickness ratio of the first positive electrode active material layer to the second positive electrode active material layer is in a range of about 13:7 to about 19:1.

11. The method according to claim 10, wherein the first binder comprises a rubber-based binder.

12. The method according to claim 10 or 11, wherein the first binder comprises at least one of a styrene-butadiene rubber , a nitrile butadiene rubber , a carboxylated nitrile butadiene rubber , and a combination thereof.

13. The method according to any of claims 10 to 12, wherein at least one of the first positive electrode active material and the second positive electrode active material comprises a compound having an olivine crystal structure.

14. The method according to any of claims 10 to 13, wherein:

an amount of the first binder is in a range of about 1 wt% to about 5 wt%, based on a total weight of the first positive electrode active material layer, and
an amount of the second binder is in a range of about 1 wt% to about 5 wt%, based on a total weight of the second positive electrode active material layer.

15. A rechargeable lithium battery (100), comprising:

a positive electrode (10);
a negative electrode (20); and

a separator (30) between the positive electrode (10) and the negative electrode (20), wherein

the positive electrode (10) comprises a positive electrode current collector, a first positive electrode active material layer on the positive electrode current collector, and a second positive electrode active material layer on the first positive electrode active materials layer,

the first positive electrode active material layer comprises a first binder,

the second positive electrode active material layer comprises a second binder, and

the first binder comprises a rubber-based binder,

the second binder comprises a styrene-acrylic rubber , and

a thickness ratio of the first positive electrode active material layer to the second positive electrode active material layer is in a range of about 13:7 to about 19:1.

# FIG. 1

COL1 AML1    30    COL2 AML2

10          20

# FIG. 2

# FIG. 3

EP 4 787 460 A1

# FIG. 4

# FIG. 5

# FIG. 6

# FIG. 7

FIG. 8

# FIG. 9

# FIG. 10

# FIG. 11

```
        ╭─────────╮
        │  Start  │
        ╰────┬────╯
             │
             ▼
  ┌─────────────────────────────┐
  │ Forming a first positive electrode │ ～S100
  │   active material layer(AML11)     │
  └─────────────────────────────┘
             │
             ▼
  ┌─────────────────────────────┐
  │ Forming a second positive electrode │ ～S300
  │   active material layer(AML12)      │
  └─────────────────────────────┘
             │
             ▼
        ╭─────────╮
        │   End   │
        ╰─────────╯
```

## EUROPEAN SEARCH REPORT

**Application Number**

EP 26 15 3739

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YIN LU ET AL: "Electrochemical Properties of Powdery LiNi sub 1/3 /sub Mn sub 1/3 /sub Co sub 1/3 /sub O sub 2 /sub Electrodes with Styrene-Acrylic-Rubber-Based Latex Binders at High Voltage", ACS APPLIED MATERIALS & INTERFACES, vol. 16, no. 49, 25 November 2024 (2024-11-25), pages 67577-67586, XP093403139, United States ISSN: 1944-8244, DOI: 10.1021/acsami.4c11185 Retrieved from the Internet: URL:https://pubs.acs.org/doi/pdf/10.1021/acsami.4c11185> * p. 2, Preparation of Electrodes; p. 2, left column; p. 3, Table 1; p. 3, Fig. 2; p. 4, right column); pages 2,4 * | 1-15 | INV. H01M4/136 H01M4/1397 H01M4/58 H01M4/62 H01M4/36 |
| A | CN 118 136 768 A (ENVISION POWER TECH JIANGSU CO LTD ET AL.) 4 June 2024 (2024-06-04) * claim 5 * * paragraph [0116] * | 1-15 | **TECHNICAL FIELDS SEARCHED (IPC)** H01M |
| A | DARJEN LIU ET AL: "Improvement of Lithium-Ion Battery Performance by Two-Layered Slot-Die Coating Operation", ENERGY TECHNOLOGY, vol. 5, no. 8, 1 August 2017 (2017-08-01), pages 1235-1241, XP055499991, DE ISSN: 2194-4288, DOI: 10.1002/ente.201600536 * the whole document * | 1-15 | |

The present search report has been drawn up for all claims

| Place of search | Date of completion of the search | Examiner |
|---|---|---|
| The Hague | 8 June 2026 | Golizadeh, Mehran |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 3739

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2026

| Patent document cited in search report | Publication date | Patent family member(s) | Publication date |
|---|---|---|---|
| CN 118136768 A | 04-06-2024 | NONE | |

EPO FORM P0459

For more details about this annex : see Official Journal of the European Patent Office, No. 12/82